# EUROPÄISCHE PATENTSCHRIFT

(11) **EP 2 829 167 B1**
(45) Veröffentlichungstag und Bekanntmachung des Hinweises auf die Patenterteilung: **26.04.2017**
(21) Anmeldenummer: 14401076.6
(22) Anmeldetag: 22.07.2014
(51) Int. Cl.: A01C 7/08

(54) **Verteiler für eine pneumatische Verteilmaschine**
Distributor for a pneumatic distribution machine
Répartiteur pour un épandeur pneumatique

(30) Priorität: 25.07.2013 DE 102013107943
(43) Veröffentlichungstag der Anmeldung: 28.01.2015
(73) Patentinhaber: Amazonen-Werke H. Dreyer GmbH & Co. KG, 49205 Hasbergen (DE)
(72) Erfinder: Brüggemann, Klaus, 27777 Ganderkesee (DE); Flucke, Jan, 27798 Hude (DE)

(56) Entgegenhaltungen:
- EP-B1- 2 363 015
- WO-A1-2005/004579
- DE-A1-102007 024 464
- DE-A1-102008 009 211
- DE-A1-102009 026 333

## Beschreibung

Die Erfindung betrifft einen Verteiler für eine pneumatische Verteilmaschine gemäß dem Oberbegriff des Patentanspruches 1.

Ein derartiger Verteiler ist beispielsweise durch die DE 102 10 010 B4 bekannt. Bei diesem Verteiler ist ein Absperrschieber vorgesehen, der die Form eines zum ringförmigen Verteilerraume konzentrischen Zylinderabschnittes aufweist. Mittels dieses Absperrschiebers können gleichzeitig mehrere Eintrittsöffnungen von Verteilerleitungen abgesperrt werden, so dass in einfacher Weise die Arbeitsbreite reduziert wird. Die Seitenenden enden in einem beträchtlichen Abstand zu den Seitenwandungen des Verteilerraumes. Dies insoweit vorteilhaft, dass ein Teil der zugeführten Luft über die an sich von der Materialverteilung abgesperrten Verteilerleitungen entweichen kann, so dass eine gleichmäßige Aufteilung des zugeführten Materiales auf die nicht abgesperrten Verteilerleitungen erhalten bleibt. Es hat sich jedoch gezeigt, dass bei ungünstigen Verhältnissen dennoch in unerwünschter Weise Material durch die zu den an sich abgesperrten Verteilerleitungen strömende und hierüber entweichende Luft mitgerissen wird. Ein weiterer Verteiler ist durch die EP 2 363015 B1 bekannt. Bei diesem Verteiler ist ein Absperrschieber vorgesehen, der die Form eines zum ringförmigen Verteilerraum nicht konzentrischen Zylinderabschnittes aufweist. Mittels dieses Absperrschiebers können gleichzeitig mehrere Eintrittsöffnungen von Verteilerleitungen abgesperrt werden, so dass in einfacher Weise die Arbeitsbreite reduziert wird. Die Seitenenden enden in einem verringerten Abstand zu den Seitenwandungen des Verteilerraumes. Dies insoweit vorteilhaft, dass ein Teil der zugeführten Luft über die an sich von der Materialverteilung abgesperrten Verteilerleitungen entweichen kann, so dass eine gleichmäßige Aufteilung des zugeführten Materiales auf die nicht abgesperrten Verteilerleitungen erhalten bleibt. Es hat sich jedoch gezeigt, dass bei ungünstigen Verhältnissen dennoch in unerwünschter Weise Material durch die zu den an sich abgesperrten Verteilerleitungen strömende und hierüber entweichende Luft mitgerissen wird. Außerdem ist noch ein Verteiler ist durch die EP 0 868 841 B1 bekannt. Bei diesem Verteiler ist ein Absperrschieber vorgesehen, der die Form eines zum ringförmigen Verteilerraume konzentrischen Zylinderabschnittes aufweist. Mittels dieses Absperrschiebers können gleichzeitig mehrere Eintrittsöffnungen von Verteilerleitungen abgesperrt werden, so dass in einfacher Weise die Arbeitsbreite reduziert wird. Die Seitenenden enden hier unmittelbar in an den Seitenwandungen des Verteilerraumes angebrachten Schiebeführungen. Dies insoweit vorteilhaft, dass die abgesperrten Verteilerleitungen völlig abgesperrt sind und auch kein Material zu den abgesperrten Verteilerleitungen gelangen kann. Dadurch, dass die an sich zu den abgesperrten Verteilerleitungen gelangen wollende zugeführte Luft nicht über die abgesperrten Verteilerleitungen entweichen kann, kommt es zu Störungen der gleichmäßige Aufteilung des zugeführten Materiales auf die nicht abgesperrten Verteilerleitungen.

Der Erfindung liegt die Aufgabe zugrunde, hier auf einfache Weise Abhilfe zu schaffen.

Diese Aufgabe wird erfindungsgemäß durch die kennzeichnenden Merkmale des Anspruches 1 gelöst.

Infolge dieser Maßnahmen lässt sich die Anordnung des Absperrschiebers in einfacher Weise optimieren. Einerseits bleibt eine ausreichend große Durchtrittsöffnung für einen Teil der zugeführten Luft, die über die an sich von der Materialverteilung abgesperrten Verteilerleitungen entweichen kann, so dass eine gleichmäßige Aufteilung des zugeführten Materiales auf die nicht abgesperrten Verteilerleitungen erhalten bleibt. Andererseits verhindern die plattenförmigen Leitelemente in verbesserter Weise, dass Material aus dem Verteilerraum zu den abgesperrten Verteilerleitungen gelangt.

Ein besonders wirksames Abschirmen der abgesperrten Verteilerleitungen, damit möglichst kein Material zu den abgesperrten Verteilerleitungen gelangt, wird dadurch erreicht, dass die plattenförmigen Leitelemente bei in den Verteilerraum eingeschobenen Absperrschieber in Richtung des nicht abgesperrten Verteilerraumes in versetzter Weise vor den Seitenenden des Absperrschiebers angeordnet sind.

Eine vorteilhafte Ausrichtung der Leitelemente wird dadurch erreicht, dass die plattenförmigen Leitelemente zumindest annähernd in radialer Richtung ausgerichtet angeordnet sind.

Eine vorteilhafte Ausrichtung der Leitelemente, insbesondere wenn wahlweise die eine oder andere Hälfte der Verteilerleitungen abgesperrt werden soll, wird dadurch erreicht, dass die plattenförmigen Leitelemente zumindest annähernd gegenüberliegend angeordnet sind.

Weitere Einzelheiten der Erfindung sind der Beispielsbeschreibung und den Zeichnungen zu entnehmen. Hierbei zeigen
- Fig. 1: den Verteilerkopf eines pneumatischen Verteil- und Dosiersystems mit im Halbschnitt dargestellten Verteilerkopfdeckel, wobei der Absperrschieber sich in seiner Absperrposition befindet, in perspektivischer Darstellung,
- Fig. 2: den Verteilerkopf in der Darstellungsweise nach Fig. 1, in Draufsicht,
- Fig. 3: den Verteilerkopf nach Fig. 1, wobei der Absperrschieber sich in seiner eingezogenen Position befindet, in perspektivischer Darstellung,
- Fig. 4: einen weiteren Verteilerkopf eines pneumatischen Verteil- und Dosiersystems mit im Halbschnitt dargestellten Verteilerkopfdeckel, wobei zwei gegenüber liegende Absperrschieber im Verteilerraum einschiebbar sind und sich der eine Absperrschieber in seiner Absperrposition und der andere Absperrschieber sich in seiner eingezogenen Position befindet, in perspektivischer Darstellung,
- Fig. 5: den Verteilerkopf in der Darstellungsweise nach Fig. 4, in Draufsicht,
- Fig. 6: den Verteilerkopf nach Fig. 4, wobei sich der eine Absperrschieber in seiner Absperrposition und der andere Absperrschieber sich in seiner eingezogenen Position befindet, jedoch gewechselt im Vergleich zu Fig.4, in perspektivischer Darstellung.

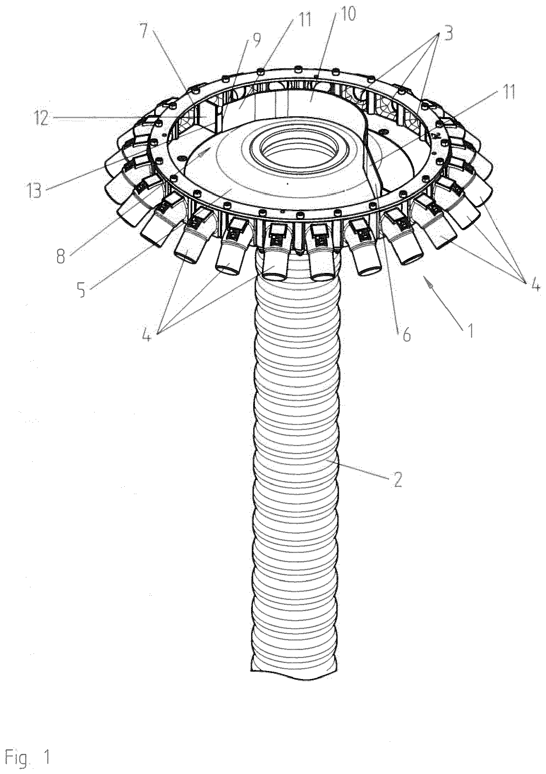

Der in den Fig. 1 bis 3 dargestellte Verteilerkopf 1 ist Bestandteil eines pneumatischen Dosier- und Verteilsystems einer pneumatischen arbeitenden landwirtschaftlichen Verteilmaschine.

Über das Zuführrohr 2, welches mit einem pneumatischen Förderluftstrom, der von einem motorisch angetriebenen Gebläse erzeugt wird, beaufschlagt ist, wird dem am Ende des Zuführrohres 2 angeordneten Verteilerkopf 1 das auszubringende Material, beispielsweise Saatgut oder Dünger in einstellbarer Weise zugeführt. Über den Verteilerkopf 1 wird das Material in bekannter Weise auf die zu einzelnen Ausbringorganen führenden Eintrittsöffnungen 3 aufweisenden Verteilerleitungen 4 aufgeteilt.

Der Verteilerraum 5 des Verteilerkopfes 1 ist ringförmig ausgestaltet. Von dem Verteilerkopf 1 aus führen, wie bereits erwähnt, mehrere Zuführleitungen 4, die Eintrittsöffnungen 3 aufweisen, weg.

Dem Verteilerkopf 1 ist ein Absperrschieber 6, der von unten in den Verteilerraum 5 des Verteilerkopfes 1 einschiebbar ist, zugeordnet. Dieser Absperrschieber 6 ist in den Verteilerraum 5 zum Absperren einzuschieben, so dass also einige Eintrittsöffnungen 3 der Verteilerleitungen 4 absperrbar sind, und aus dem Verteilerraum 5 herausbewegbar, so dass das zugeführte Material auf alle Eintrittsöffnungen 3 der Verteilerleitungen 4 in gleichmäßiger Weise aufgeteilt wird.

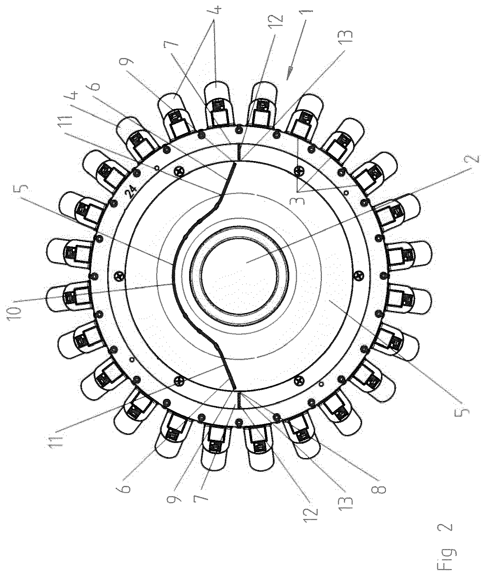

Der Absperrschieber 6 ist in seiner Absperrstellung entsprechend der Fig. 1 beabstandet zu den Eintrittsöffnungen 3 der Verteilerleitungen 4 und zu den Seitenwandungen 7 des Verteilerraumes 5 angeordnet, so dass die Luft von der Zuführleitung 2 zu den Eintrittsöffnungen 3 der abgesperrten Verteilerleitungen durch den Zwischenraum 8 zwischen den Seitenenden 9 des Absperrschiebers 6 und den benachbarten Seitenwandungen 7 des Verteilerkopfes 1 gelangt, wie Fig. 1 und 2 zeigen.

Der Absperrschieber 6 weist in dem Ausführungsbeispiel, wie in Fig. 2 erkennbar ist, die Form eines zum ringförmigen Verteilerraum 5 nicht konzentrischen Zylinderabschnittes auf. Der Absperrschieber besitzt in seinem der Zuführleitung 2 unmittelbar benachbarten Bereich einen Schieberabschnitt 10, der einen der Kreiskontur der Zuführleitung 2 und des ringförmigen Verteilerraumes 5 ähnlichen und/oder angepassten Krümmungsverlauf aufweist. An diesen mittleren Bereich 10 des Absperrschiebers 6 schließen sich jeweils auf jeder Seite eine entgegen gesetzte Krümmung aufweisende Schieberabschnitte 11 an. Diese Abschnitte 11 laufen in gerade Flächen aus.

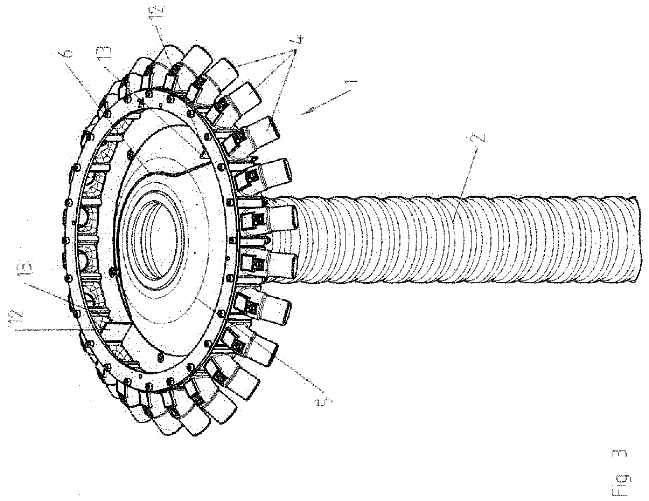

Der Absperrschieber 6 weist in seinem der Zuführleitung 2 unmittelbar benachbarten Bereich einen zumindest annähernd ringförmigen Zylinderabschnitt 10 auf, der sich über einen Bereich zwischen 70° und 120°, vorzugsweise etwa 90°, erstreckt und zumindest annähernd konzentrisch zu der Kreiskontur der Zuführleitung 2 und des ringförmigen Verteilerraumes verläuft. An diesem mittleren Bereich 10 des Absperrschiebers 6 schließen sich mit zum dem mittleren als Kreisabschnitt ausgebildeten Bereich 10 jeweils auf jeder Seite eine entgegen gesetzte Krümmung aufweisende Schieberabschnitte 11 an, die im Ausführungsbeispiel gemäß Fig. 2 in eine gerade Fläche auslaufen. Der Absperrschieber 6 weist somit einen wellenförmigen Konturenverlauf auf. Weiterhin ist dieser Konturenverlauf so, dass er dem Querschnitt eines tief gezogenen Suppentellers mit Tellerrand ähnelt.
Der Schieber 6 kann mittels nicht dargestellter motorischer Elemente in eine Außerbetriebsposition aus dem Verteilerraum 5 herausgezogen werden, wie Fig. 3 zeigt, dass er die gleichmäßige Verteilung des über die Zuführleitung 2 dem Verteilerraum 5 pneumatisch zugeführten Saatgutes nicht stört, so dass sich in dem Verteilerraum 5 das Saatgut in gleichmäßiger Weise auf die einzelnen zu den Verteilerleitungen 4 führenden Eintrittsöffnungen 3 aufteilen kann.

Weiterhin kann mittels des motorischen Einstellelementes der Absperrschieber 6 in die in Fig. 1 dargestellte Absperrposition gebracht werden, so dass die Hälfte der Eintrittsöffnungen 3 bzw. die Verteilerleitungen 4 von dem übrigen Verteilerraum abgesperrt werden können.

In dem Verteilerraum sind die an die Seitenwandungen 7 des Verteilerraumes 5 heranreichende plattenförmigen Leitelemente 12 in dem Bereich der Seitenenden 9 des Absperrschiebers 6 angeordnet, wie die Fig. 1 bis 3 zeigen. Die Anordnung ist so getroffen, dass zwischen den Seitenenden 9 des Absperrschiebers 6 und den freien Enden 13 der plattenförmigen Leitelemente 12 ein spaltähnlicher Abstand 8 vorhanden ist, wie die Fig. 1 und 2 zeigen. Die plattenförmigen Leitelemente 12 sind zumindest annähernd in radialer Richtung ausgerichtet angeordnet. Weiterhin sind die plattenförmigen Leitelemente 12 zumindest annähernd gegenüberliegend angeordnet. Darüber hinaus sind die plattenförmigen Leitelemente 12 bei in den Verteilerraum 5 eingeschobenem Absperrschieber 6 in Richtung des nicht abgesperrten Verteilerraumes in versetzter Weise vor den Seitenenden 9 des Absperrschiebers 6 angeordnet.

Somit wird durch die Anordnung der Leitelemente 12 in der beschrieben Zuordnung zu den Absperrschiebern 6 in einfacher Weise optimiert. Einerseits bleibt eine ausreichend große Durchtrittsöffnung 8 für einen Teil der zugeführten Luft, die über die an sich von der Materialverteilung abgesperrten Verteilerleitungen 4 entweichen kann, so dass eine gleichmäßige Aufteilung des zugeführten Materiales auf die nicht abgesperrten Verteilerleitungen 4 erhalten bleibt. Andererseits verhindern die plattenförmigen Leitelemente 12 in verbesserter Weise, dass Material aus dem Verteilerraum 5 zu den abgesperrten Verteilerleitungen 4 gelangt.

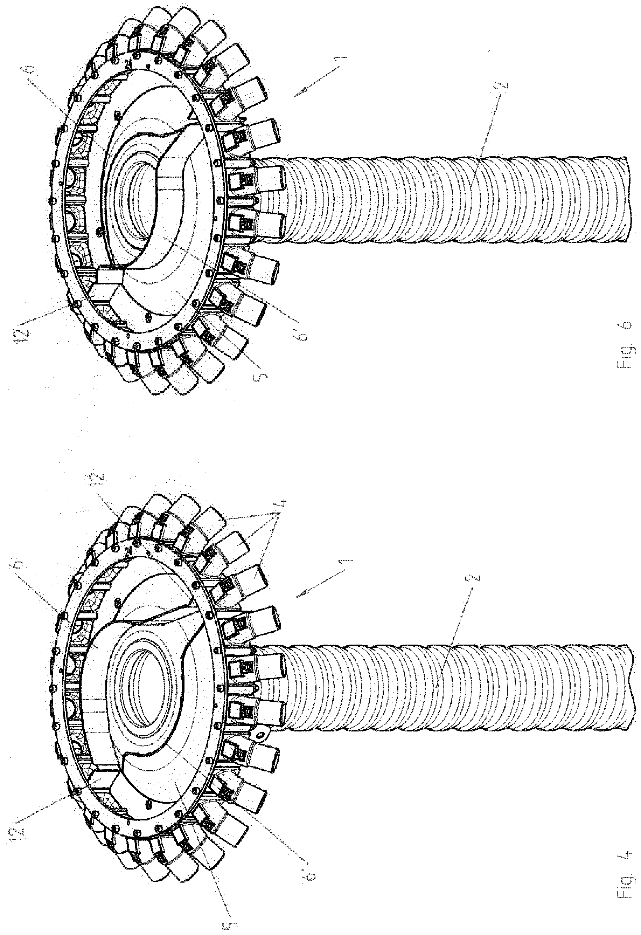

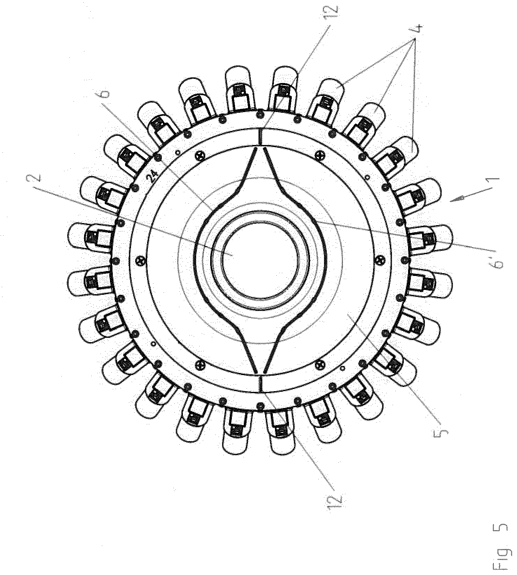

Das Ausführungsbeispiel gemäß den Fig. 4 bis 6 unterscheidet sich von dem Ausführungsbeispiel gemäß den Fig. 1 bis 3 dadurch, dass zusätzlich ein weiterer dem ersten Absperrschieber 6 gegenüber liegender ebenfalls in den Verteilerraum 5 zur Absperrung von Verteilerleitungen 4 einschiebbarer Absperrschieber 6' im Verteilerraum 5 angeordnet ist. Gemäß Fig. 4 ist der in der Darstellung hintere Absperrschieber 6 in seine Absperrstellung in den Verteilerraum 5 eingeschoben, während gemäß Fig. 6 der in der Darstellung vordere Absperrschieber 6' in seine Absperrstellung in den Verteilerraum 5 eingeschoben ist.

## Patentansprüche

1. Verteiler (1) für eine pneumatische Verteilmaschine für Saatgut, Dünger und dergleichen mit folgenden Merkmalen:
1.1. einen ringförmigen Verteilerraum (5) definierenden Verteilerkopf (1),
1.2. in den Verteilerkopf (1) mündet mindestens eine Zuführleitung (2)
1.3. an den Verteilerkopf (1) schließen, mit Abstand zu der Zuführleitung (2), Verteilerleitungen (4) an,
1.4. zumindest einen Absperrschieber (6, 6'),
1.5. der Absperrschieber (6, 6) ist in den ringförmigen Verteilerraum (5) einschiebbar und aus diesem heraus bewegbar und zwar derart, dass die Seitenenden (9) des Absperrschiebers (6, 6') in seiner Absperrstellung beabstandet zu den Eintrittsöffnungen (3) der Verteilerleitungen (4) und/oder zu den Seitenwandungen (7) des Verteilerraumes (5) angeordnet sind, so dass Luft von der Zuführleitung (2) zu den Eintrittsöffnungen (3) der abgesperrten Verteilerleitungen (4) durch den Raum zwischen den Seitenenden (9) des Absperrschiebers (6, 6') und der benachbarten Seitenwandung (7) des Verteilerraumes (5) gelangt,
**dadurch gekennzeichnet,**
**dass** bis an die Seitenwandungen (7) des Verteilerraumes (5) heranreichende plattenförmige Leitelemente (12) in dem Bereich der Seitenenden (9) des in den Verteilerraum (5) eingeschobenen Absperrschiebers (6, 6') angeordnet sind,
**dass** zwischen den Seitenenden des in den Verteilerraum (5) eingeschobenen Absperrschiebers (6, 6') und den freien Enden (13) der plattenförmigen Leitelemente (12) ein spaltähnlicher Abstand (8) vorhanden ist, und dass der Absperrschieber (6, 6') gegenüber den Leitelementen (12) aus dem Verteilerraum (5) heraus und in diesen einschiebbar ist.

2. Verteiler nach Anspruch 1, **dadurch gekennzeichnet, dass** die plattenförmigen Leitelemente (12) bei in den Verteilerraum (5) eingeschobenen Absperrschieber (6, 6') in Richtung des nicht abgesperrten Verteilerraumes (5) in versetzter Weise vor den Seitenenden (9) des Absperrschiebers (5) angeordnet sind.

3. Verteiler nach zumindest einem der vorstehenden Ansprüche, **dadurch gekennzeichnet, dass** die plattenförmigen Leitelemente (12) zumindest annähernd in radialer Richtung ausgerichtet angeordnet sind.

4. Verteiler nach zumindest einem der vorstehenden Ansprüche, **dadurch gekennzeichnet, dass** die plattenförmigen Leitelemente (12) zumindest annähernd gegenüberliegend angeordnet sind.

## Claims

1. Distributor (1) for a pneumatic distribution machine for seeds, fertilizer and the like, having the following features:
1.1. a distributor head (1) defining an annular distributor space (5),
1.2. at least one feed line (2) leads into the distributor head (1),
1.3. distributor lines (4) are connected to the distributor head (1), at a distance from the feed line (2),
1.4. at least one shut-off slider (6, 6'),
1.5. the shut-off slider (6, 6) is pushable into the annular distributor space (5) and is movable out of the latter, specifically in such a manner that the side ends (9) of the shut-off slider (6, 6'), in the shut-off position thereof, are spaced apart from the inlet openings (3) of the distributor lines (4) and/or from the side walls (7) of the distributor space (5) such that air passes from the feed line (2) to the inlet openings (3) of the shut-off distributor lines (4) through the space between the side ends (9) of the shut-off slider (6, 6') and the adjacent side wall (7) of the distributor space (5),
**characterized**
**in that** plate-like guiding elements (12) extending as far as the side walls (7) of the distributor space (5) are arranged in the region of the side ends (9) of the shut-off slider (6, 6') pushed into the distributor space (5), in that there is a gap-like distance (8) between the side ends of the shut-off slider (6, 6') pushed into the distributor space (5) and the free ends (13) of the plate-like guiding elements (12), and in that the shut-off slider (6, 6') is pushable in relation to the guiding elements (12) out of the distributor space (5) and into the latter.

2. Distributor according to Claim 1, **characterized in that**, when the shut-off slider (6, 6') is pushed into the distributor space (5), the plate-like guiding elements (12) are arranged in an offset manner in front of the side ends (9) of the shut-off slider (5) in the direction of the distributor space (5) which is not shut off.

3. Distributor according to at least one of the preceding claims, **characterized in that** that the plate-like guiding elements (12) are arranged oriented at least approximately in the radial direction.

4. Distributor according to at least one of the preceding claims, **characterized in that** the plate-like guiding elements (12) are arranged at least approximately opposite one another.

## Revendications

1. Distributeur (1) pour une machine de distribution pneumatique de semences, d'engrais et similaires, comprenant les caractéristiques suivantes :
1.1. une tête de distribution (1) définissant un espace de distribution annulaire (5),
1.2. au moins une conduite d'alimentation (2) débouche dans la tête de distribution (1),
1.3. à la tête de distribution (1) se raccordent, à distance de la conduite d'alimentation (2), des conduites de distribution (4),
1.4. au moins une vanne d'arrêt (6, 6'),
1.5. la vanne d'arrêt (6, 6) peut être introduite dans l'espace de distribution annulaire (5) et ressortie de celui-ci et ce de telle sorte que les extrémités latérales (9) de la vanne d'arrêt (6, 6'), dans sa position d'arrêt, soient disposées à distance des ouvertures d'entrée (3) des conduites de distribution (4) et/ou des parois latérales (7) de l'espace de distribution (5), de sorte que de l'air parvienne depuis la conduite d'alimentation (2) jusqu'aux ouvertures d'entrée (3) des conduites de distribution bloquées (4) à travers l'espace entre les extrémités latérales (9) de la vanne d'arrêt (6, 6') et la paroi latérale (7) adjacente de l'espace de distribution (5),
**caractérisé en ce que**
des éléments directeurs (12) en forme de plaque s'étendant jusqu'aux parois latérales (7) de l'espace de distribution (5) sont disposés dans la région des extrémités latérales (9) de la vanne d'arrêt (6, 6') enfoncée dans l'espace de distribution (5),
**en ce qu'**entre les extrémités latérales de la vanne d'arrêt (6, 6') enfoncée dans l'espace de distribution (5) et les extrémités libres (13) des éléments directeurs (12) en forme de plaque est prévu un espace de type fente (8) et **en ce que** la vanne d'arrêt (6, 6') peut être ressortie par rapport aux éléments directeurs (12) hors de l'espace de distribution (5) et peut être enfoncée dans celui-ci.

2. Distributeur selon la revendication 1, **caractérisé en ce que** lorsque la vanne d'arrêt (6, 6') est enfoncée dans l'espace de distribution (5), les éléments directeurs (12) en forme de plaque sont disposés de manière décalée avant les extrémités latérales (9) de la vanne d'arrêt (5) dans la direction de l'espace de distribution (5) non bloqué.

3. Distributeur selon au moins l'une quelconque des revendications précédentes, **caractérisé en ce que** les éléments directeurs (12) en forme de plaque sont disposés de manière orientée au moins approximativement dans la direction radiale.

4. Distributeur selon au moins l'une quelconque des revendications précédentes, **caractérisé en ce que** les éléments directeurs (12) en forme de plaque sont disposés au moins approximativement en regard les uns des autres.
